# EUROPEAN PATENT SPECIFICATION

(11) **EP 1 466 792 B1**
(45) Date of publication and mention of the grant of the patent: **30.05.2007**
(21) Application number: 04015946.9
(22) Date of filing: 25.04.2002
(51) Int. Cl.: B60R 21/16

(54) **Leg protection device for vehicle occupants**
Beinschutzeinrichtung für Fahrzeuginsassen
Equipement de protection des membres inférieurs des occupants d'un véhicule

(30) Priority: 21.05.2001 JP 2001151165; 18.10.2001 JP 2001320680; 26.11.2001 JP 2001359689; 08.03.2002 JP 2002063991
(43) Date of publication of application: 13.10.2004
(62) Divisional of application: 02009231.8
(73) Proprietor: TAKATA CORPORATION, Minato-ku, Tokyo 106-8510 (JP)
(72) Inventor: Abe, Kazuhiro c/o Takata Corporation, Tokyo 106-8510 (JP)
(74) Representative: Banzer, Hans-Jörg

(56) References cited:
- DE-A- 19 934 245
- DE-A- 19 946 477
- US-A- 6 155 595

## Description

### [Detailed Description of the Invention]

### [Industrial Field of the Invention]

The present invention relates to a leg protection device comprising an airbag for protecting the vehicle occupant's legs from colliding with something such as an interior panel in front of a seat in the event of a vehicle collision, and particularly directed to a leg protection device comprising an airbag which is provided therein with a plurality of chambers.

### [Related Art]

In conventional leg protection devices of a type comprising an airbag which is inflated in front of a vehicle occupant to receive his or her legs in the event of a vehicle collision so as to protect the vehicle occupant, a single chamber is normally formed inside the airbag without partition as disclosed in Japanese Utility Model Publication No. 847-24110, Japanese Patent Unexamined Publication No. H05-208646, Japanese Patent Unexamined Publication No. H05-208653, and Japanese Patent Unexamined Publication No. H05-213144.

### [Problems to be resolved by the Invention]

An occupant sitting on a vehicle seat may assume various sitting postures, for example, with his or her knees apart and/or with his or her legs extending sideways. The position of the knees may be often spaced apart from the center of the seat. Therefore, an airbag of a leg protection device is preferably designed to rapidly spread in the vehicle lateral directions after start of inflation. In addition, in order to prevent the occupant's legs from colliding any vehicle member in front of the vehicle seat when the legs plunge into the inflated airbag, the airbag is desired to securely receive and stop the occupant's legs.

In the conventional leg protection device comprising an airbag having a single chamber therein, since the dimension of the inflated airbag in the vehicle longitudinal direction (hereinafter, sometimes referred to as "the thickness of the airbag) is large, the sufficient inflation of the airbag with attaining the large thickness enables the occupant's legs to be effectively received. However, if the airbag having the single chamber therein is designed to be also expanded laterally, the thickness of the inflated airbag must be too large and a gas generator having significantly large generating capacity is required.

It is an object of the present invention to provide a leg protection device for vehicle occupants of which an airbag can be rapidly and widely expanded along a vehicle member in front of a vehicle seat even with a gas generator having small generating capacity. It is another object of the present invention is to provide a leg protection device for vehicle occupants which can sufficiently receive and stop occupant's legs even with an airbag having a smaller thickness when inflated.

In DE 19934245 A1, an airbag device is disclosed, which generally corresponds to the preamble of independent claim 1.

### [Means to Solve the Problems]

According to the present invention, these objects are achieved by an airbag device as defined in claim 1. The dependent claims define advantageous and preferred embodiments of the present invention.

A leg protection device for vehicle occupants of the present invention comprises: an airbag installed in a vehicle member in front of a vehicle seat; and a gas generator for inflating the airbag, and is characterized in that the airbag is provided with a first chamber into which gas from the gas generator is first introduced, and a second chamber into which the gas passing through the first chamber is introduced, and that the first chamber and the second chamber are arranged to extend along said vehicle member when the airbag is inflated.

In the leg protection device of the present invention, as the gas generator is actuated to spout out gas in the event of a vehicle collision, the gas first flows into the first chamber and successively flows from the first chamber to the second chamber, thereby inflating the first chamber and the second chamber. In this case, since the airbag is deployed to extend along the vehicle member in front of the vehicle seat, the projection amount of the airbag from the vehicle member is small, whereby the occupant's legs can be protected by a wide area of the airbag. In the present invention, the inlet of the second chamber is narrowed. Because of the narrowed inlet of the second chamber, the gas in the second chamber hardly flows back to the first chamber when the occupant's leg plunges into the second chamber. Accordingly, the leg can be received and stopped enough by the second chamber.

Since both of the first and second chambers are designed to be deployed to extend along the vehicle member in front of the vehicle seat, the area of the airbag when inflated is large, thereby receiving the occupant's legs in spite of variety of leg positions.

In the present invention, the airbag comprises a front panel arranged to face a vehicle occupant and a rear panel arranged to face said vehicle member, and the inside of the airbag is divided into said first chamber and said second chamber by a linear joint portion connecting the front panel and the rear panel. According to this structure, the thickness of the airbag when inflated is limited to be small, whereby the airbag can be rapidly inflated even with a gas generator having small generating capacity.

In the present invention, the second chamber extends to allow gas entering through its inlet to flow straight therein, thereby speeding up the inflation of the second chamber. The second chamber is provided at its inlet with a partition extending in a direction perpendicular to the longitudinal direction of the second chamber in order to narrow the width of said inlet, thereby securely reducing gas flowing back from the second chamber.

In the present invention, the airbag may be provided with a plurality of second chambers, and at least one of the second chambers has a size different from that of the other second chamber(s). According to this structure, the leg protection device can be designed according to the design of a vehicle and the profile of an instrument panel, the layout of a seat. For example, in case of a second chamber to be inflated in a small space between the vehicle member and the legs, the leg protection device is designed such that the thickness of the second chamber when inflated is small. In case of a second chamber to be inflated in a large space between the vehicle member and the legs, the leg protection device is designed such that the thickness of the second chamber when inflated is large.

In the present invention, at least a part of the first chamber may extend substantially in the vertical direction of the airbag and a plurality of the second chambers may extend substantially in the lateral direction. According to the leg protection device, gas is dispersed or supplied from the first chamber to a plurality of the second chambers, thereby uniformly inflating the second chambers. Since the second chambers extend in the lateral direction, the occupant's legs can be securely received and stopped by the second chambers even when the occupant's legs are spaced apart from the center of the vehicle seat.

In the present invention, the airbag may further comprise a third chamber into which gas passing through said second chamber is introduced and the inlet of said third chamber may be narrowed. Because of the narrowed inlet of the third chamber, the gas in the third chamber hardly flows back to the second chamber when the occupant's leg plunges into the third chamber. Accordingly, the leg can be received and stopped enough by the third chamber. Also in this case, by designing the second and third chambers to extend substantially in the lateral direction, the occupant's legs can be securely received by the airbag in spite of variety of leg positions.

In the present invention, a chamber to receive the knees of the occupant may be designed to have a thickness larger than that of the other chamber (s) when inflated, thereby enough absorbing the impact on the knees and the joints for thighs.

To make the thickness of a chamber for receiving the occupant's knees larger than that of the other chamber(s), the chamber be deployed about a portion in front of knees of the vehicle occupant is designed to have a thickness larger than that of the other chamber(s).

To make the thickness of a chamber for receiving the occupant's knees larger than that of the other chambers in the leg protection device of the present invention in which at least a part of the first chamber extends substantially in the vertical direction of the airbag and a plurality of the second chambers extend substantially in the lateral direction, one of the second chambers is located at the top of the airbag and this uppermost second chamber is the chamber having thickness larger than that of the other chambers, and the uppermost second chamber is to be deployed about a portion in front of knees of the vehicle occupant.

### [Brief Explanation of the drawings]

Fig. 1 is a vertical sectional view showing a leg protection device according to an embodiment of the invention.
Fig. 2 is a sectional view taken along a line II-II of Fig. 1.
Fig. 3(a) is a vertical sectional view of the leg protection device when an airbag thereof is inflated, Fig. 3(b) is a view as seen in a direction of arrows B-B of Fig. 3(a), and Fig. 3(c) is a sectional view taken along a line C-C of Fig. 3(b).
Fig. 4 is a front view an airbag according to another embodiment.
Fig. 5 is a front view an airbag according to another embodiment.
Fig. 6 is a front view an airbag according to another embodiment.
Fig. 7 is a front view an airbag according to another embodiment.
Fig. 8 is a front view an airbag according to another embodiment.
Fig. 9 is a vertical sectional view of an airbag in the inflated state of a leg protection device according to still another embodiment.
Figs. 10(a), 10(b) are a front view and a vertical sectional view of a leg protection device.
Figs. 11(a)-11(c) are illustrations for explaining an airbag.
Figs. 12 (a) , 12 (b) are illustrations for explaining an airbag.
Fig. 13 is a sectional view showing the airbag of Figs. 12(a), 12(b) in its inflated state.
Figs. 14 (a)-14 (c) are illustrations for explaining an airbag.
Figs. 15 (a) , 15 (b) are illustrations for explaining an airbag according to another embodiment.
Fig. 16 is an illustration for explaining an airbag.
Fig. 17 is an illustration for explaining an airbag.

### [Embodiments for carrying out the Invention]

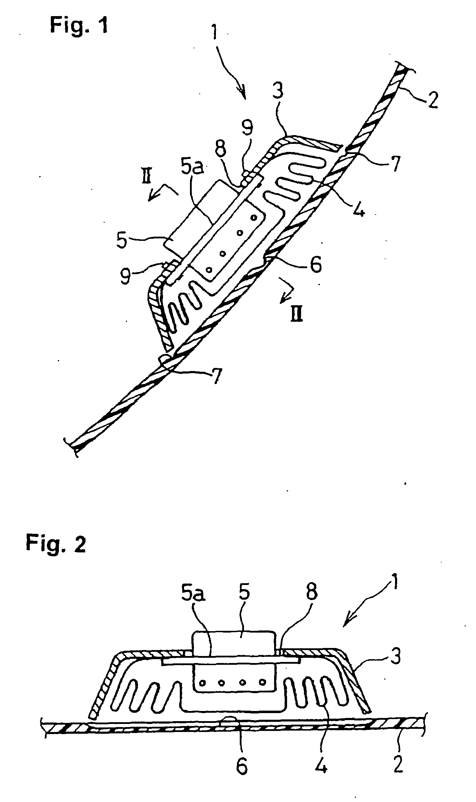

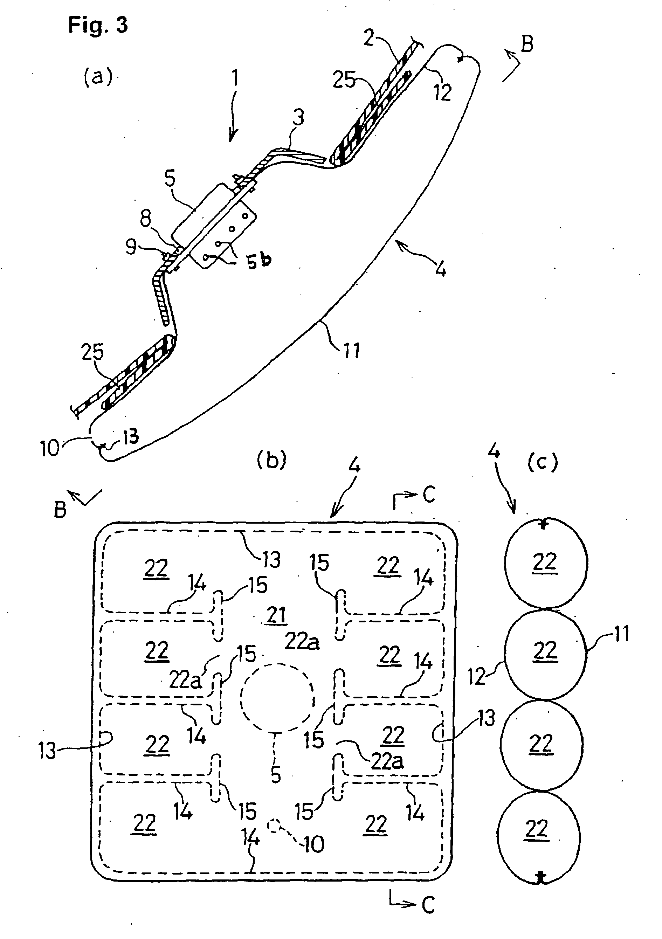

Hereinafter, embodiments of the present invention will be described with reference to the attached drawings. Fig. 1 is a vertical sectional view showing a leg protection device according to an embodiment, Fig. 2 is a sectional view taken along a line II-II of Fig. 1, Fig. 3 (a) is a vertical sectional view of the leg protection device when an airbag thereof is inflated, Fig. 3 (b) is a view as seen in a direction of arrows B-B of Fig. 3 (a) , and Fig. 3 (c) is a sectional view taken along a line C-C of Fig. 3(b).

A leg protection device 1 is installed in an interior panel 2 in front of a front passenger seat of a vehicle. The interior panel 2 is disposed below an instrument panel. The leg protection device 1 is arranged substantially at the same level of the surface of the front passenger seat.

The leg protection device 1 comprises a casing 3 disposed on a rear surface of the interior panel 2, an airbag 4 folded and accommodated in the casing 3, and a gas generator 5 for inflating the airbag 4. The casing 3 is opened at its front and is disposed such that this open front is covered by the interior panel 2. The interior panel 2 is provided with tear lines 6 and hinge lines 7, allowing the interior panel 2 to be torn along tear lines 6 and to be bent at the hinge lines 7 during the inflation of the airbag 4. Both the tear lines 6 and the hinge lines 7 are composed of grooves formed in the interior panel 2.

The gas generator 5 has a flange 5a projecting from the side periphery thereof. The edge around a gas inlet of the airbag 4 is held or sandwiched between the flange 5a and the casing 3. The casing 3 has an opening 8 through which the gas generator 5 is inserted. The flange 5a is fixed to the edge around the opening 8 by bolts 9. The casing 3 is fixed to a vehicle member via a bracket, which is not shown.

As shown in Fig. 3(a), in this embodiment, the airbag 4 is composed of a front panel 11 arranged to face an occupant and a rear panel 12. The rear panel 12 is provided with an insertion hole (the above-mentioned gas inlet; without numeral) for gas generator 5 and a vent hole 10 formed therein.

These panels 11, 12 are joined linearly along their periphery to make them into an envelope shape. Numeral 13 designates a joint line for the joint along their periphery.

A plurality (in this embodiment, six in total) of joint lines 14 extend from the peripheral joint line 13. Each joint line 14 is a linear sewn portion rectilinearly extending substantially in the lateral direction in a state that the airbag 4 is inflated. The joint lines 14 are continuously connected at their distal ends to the joint line 13. By the joint lines 14, eight second chambers 22 are defined inside the airbag 4.

The joint lines 14 have partitions 15 at the proximal ends thereof, respectively, to extend vertically, whereby inlets 22a of the second chambers 22 are narrowed.

The second chambers 22 are arranged in left and right rows and in four stages in the vertical direction.

Arranged at the center in the lateral direction of the airbag 4 is a first chamber 21. The first chamber 21 extends from the upper end to the lower end. The gas generator 5 is located at the center in the vertical direction of the first chamber 21.

As the vehicle equipped with the leg protection device having the aforementioned structure comes into a frontal collision, the gas generator 5 is actuated to spout out gas through gas ports 5b so as to initiate the inflation of the airbag 4.

Gas from the gas generator 5 first flows into the first chamber 21 so that the first chamber 21 starts to inflate. Subsequently, the gas in the first chamber 21 flows through the inlets 22a to inflate the second chambers 22.

According to the initiation of inflation of the airbag 4, the interior panel 2 is pressed by the airbag 4 so as to be torn along the tear lines 6, forming flaps 25. The flaps 25 are bent at the hinge lines 7. According to the opening of the flaps 25, the airbag 4 is expanded into a vehicle cabin and is deployed along the front surface of the interior panel 2.

The inflated airbag 4 receives and stops plunging legs of the occupant. As the legs plunge into the airbag 4, the internal pressure of the airbag 4 is increased so that a part of gas flows out through the vent hole 10, thereby absorbing impact.

In the leg protection device 1, the inside of the airbag 4 is divided into the first chamber 21 and the second chambers 22. The inflation of the airbag 4 initiates at the first chamber 21. At this point, nearly entire gas pressure is used for inflating the first chamber 21 so that the first chamber 21 is rapidly inflated. As the first chamber 21 is inflated, gas is distributed from the first chamber 21 substantially uniformly into the respective second chambers 22, whereby the respective second chambers 22 are substantially uniformly inflated in the lateral direction along the interior panel 2.

Since the joint lines 14 defining the second chambers 22 extend rectilinearly, gas flowed into the second chambers 22 through the inlets 22a flows just straight forward, thereby rapidly inflating the second chambers 22.

Since the front panel 11 and the rear panel 12 of the airbag 4 are connected by the joint lines 14 and the partitions 15, the thickness of the airbag 4 is small even when the airbag 4 is fully inflated. Therefore, the airbag 4 can be rapidly inflated with none or little interference of the occupant's legs even though the space between the occupant's legs and the interior panel 2 is small. When the legs plunge into the inflated airbag 4, the internal pressure of the chamber 21 or 22 into which the legs plunge is increased.

Since the increase in the internal pressure is extreme as compared to that of the conventional example having an airbag with a single chamber, the occupant' legs can be sufficiently received and stopped. Particularly because of the narrowed inlets 22a of the second chambers 22, the gas in the second chambers 22 hardly flows back to the first chamber 21. Accordingly, the impact on the leg received by the second chamber 22 can be absorbed extremely enough.

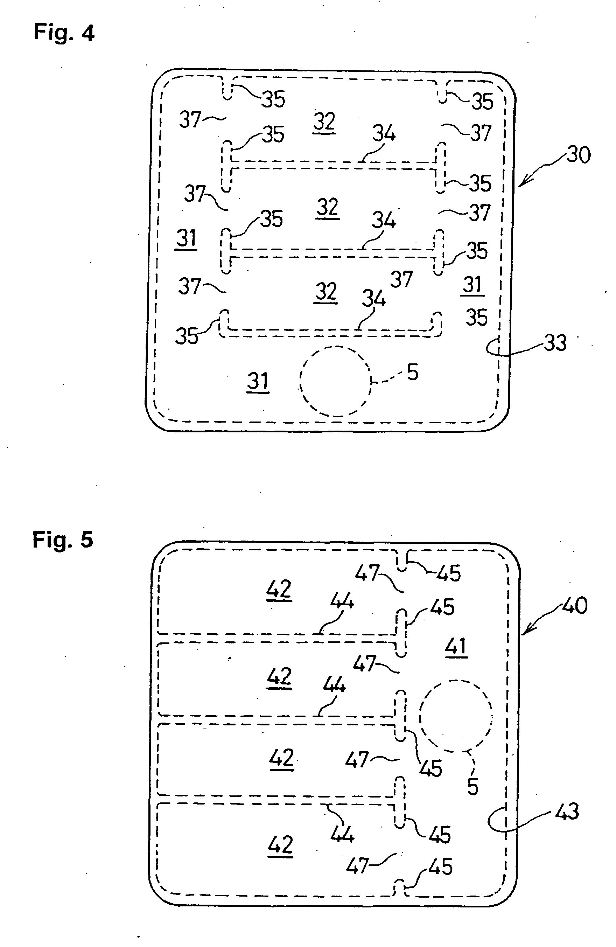

Fig. 4 through Fig. 9 are front views showing airbags according to different embodiments, respectively.

An airbag 30 shown in Fig. 4 has a first chamber 31 formed in a U-like shape extending along the lower edge, the left-and right-side edges of the airbag. The gas generator 5 is located at the center of a portion along the lower edge of the first chamber 31. Second chambers 32 extend in the lateral direction. Each second chamber 32 has gas inlets 37 at both lateral sides. Numeral 33 designates a joint line along the peripheral edge of the panels, 34 designates joint lines as linear sewn portions for defining the second chambers 32, and 35 designates partitions for narrowing the inlets 37.

An airbag 40 shown in Fig. 5 has a first chamber 41, extending vertically along the right-side edge of the airbag, and second chambers 42, communicating with the first chamber 41 through gas inlets 47 which are formed at the right end sides of the second chambers 42, respectively. The gas generator 5 is located at the center in the vertical direction of the first chamber 41. Numeral 43 designates a joint line along the peripheral edge of the panels, 44 designate joint lines as linear sewn portions for defining the second chambers 42, and 45 designates partitions for narrowing the gas inlets 47.

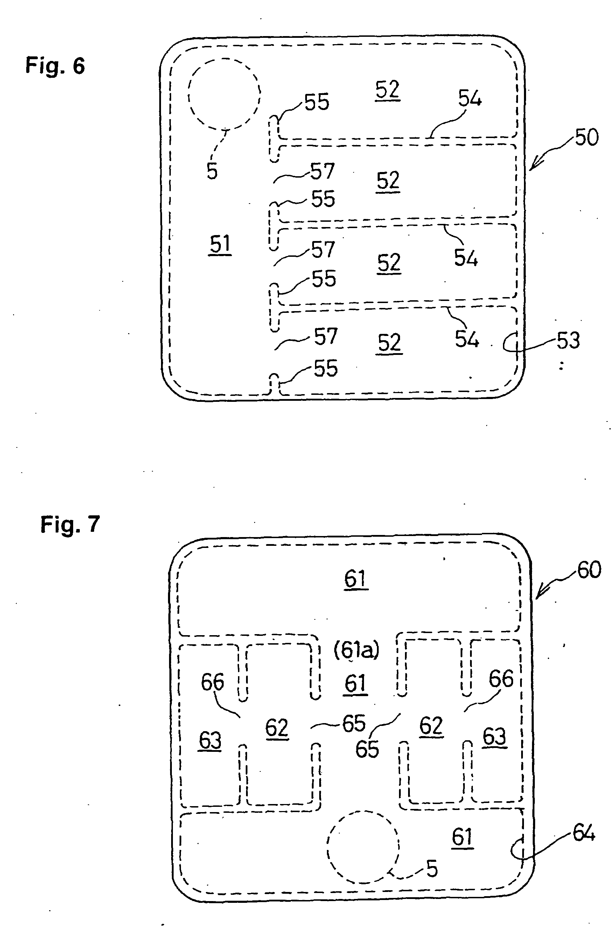

An airbag 50 shown in Fig. 6 has a first chamber 51, extending vertically along the left-side edge of the airbag, and second chambers 52, communicating with the first chamber 51 through gas inlets 57 which are formed at the left end sides of the second chambers 52, respectively. The gas generator 5 is located in an upper portion of the first chamber 51. Numeral 53 designates a joint line along the peripheral edge of the panels, 54 designate joint lines as linear sewn portions for defining the second chambers 52, and 55 designates partitions for narrowing the gas inlets 57.

An airbag 60 shown in Fig. 7 has a first chamber 61, extending along the upper edge, vertically along a middle portion, and along the lower edge of the airbag. That is, the first chamber 61 is formed in a sideward H-like shape. Second chambers 62 are arranged on both sides of the middle portion (61a) of the first chamber 61 such that each second chamber 62 extends vertically. Third chambers 63 are each formedbetween the second chamber 62 and right- or left-side edge of the airbag 60. The second chambers 62 communicate with the first chamber 61 (61a) through gas inlets 65. The third chambers 63 communicate with the second chambers 62 through gas inlets 66, respectively. The gas generator 5 is located at the center of a portion along the lower edge of the first chamber 61.

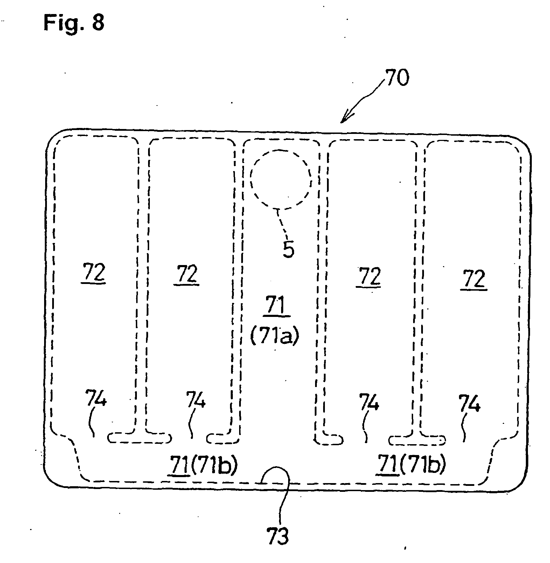

An airbag 70 of Fig. 8 has a first chamber 71 comprising a portion (71a) extending vertically at the middle and a portion (71b) extending along lower edge of the airbag. That is, the first chamber 71 is formed in an inverse T-like shape. The second chambers 72 are arranged on both side of the portion 71a of the first chamber 71 to extend vertically. The second chambers 72 communicate with the portion 71b of the first chamber 71 through gas ports 74 which are each formed at the bottom of each second chamber 72. The gas generator 5 is located at an upper side of the portion 71a of the first chamber 71.

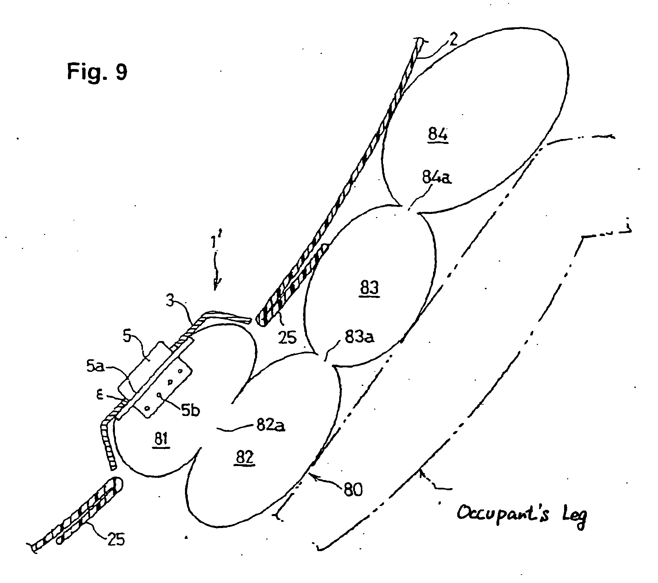

An airbag 80 of a leg protection device 1' shown in Fig. 9 comprises a first chamber 81, a second chamber 82, a third chamber 83, and a forth chamber 84. The greater part of the first chamber 81 stays within the casing 3 even when the airbag 80 is fully deployed. The second chamber 82 expands in front of the first chamber 81. The third chamber 83 expands above the second chamber 82, and the fourth chamber 84 expands above the third chamber 83.

The second, third, and fourth chambers, 82, 83, 84 communicate with the first, second, and third chambers 81, 82, 83 through narrowed gas inlets 82a, 83a, 84a, respectively.

The third and fourth chambers 83, 84 expand along the interior panel 2. The second, third, fourth chambers 82, 83, 84 extend in the lateral direction in the inflated state. The number of the gas inlet 82a, 83a, or 84a is one or more.

The other structure of Fig. 9 is the same as that of Fig. 3(a).

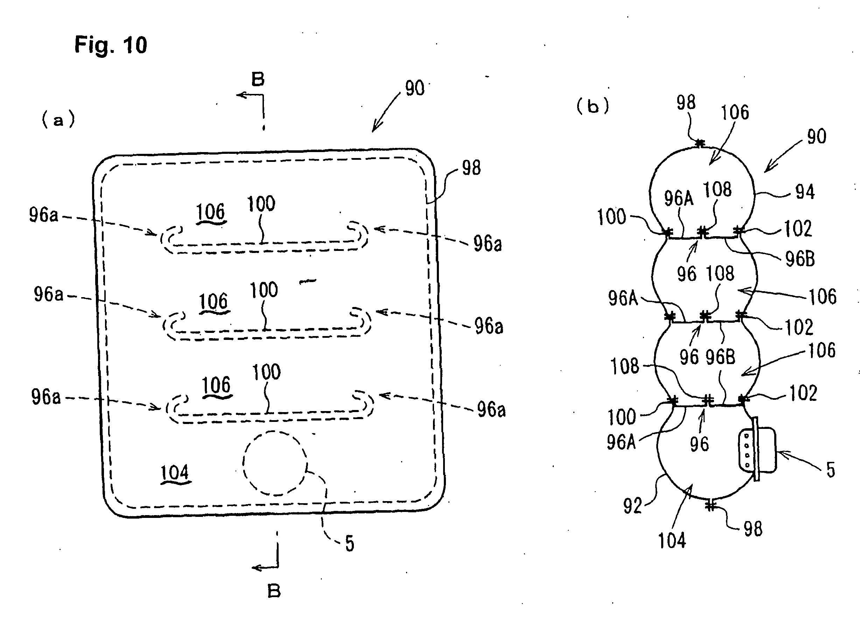

Fig. 10(a) is a plan view of an airbag according to a comparative example and Fig. 10 (b) is a sectional view taken along a line B-B of Fig. 10(a).

As shown in Figs. 10 (a) , 10 (b) , this airbag 90 comprises a front panel 92 and a rear panel 94 which are connected to each other by three partition panels 96. The partition panels 96 are arranged such that they extend substantially parallel to each other both in the thickness direction and the vehicle-lateral direction. As shown in Fig. 10(a), the left and right ends of each partition panel 96 are spaced apart from the left- and right-side edges of the airbag 90, respectively. Each partition panel 96 has curved portions 96a, curved upward in a J-like shape, at the both ends.

In Figs. 10(a), 10(b), numeral 98 designates a joint line connecting the front panel 92 and the rear panel 94, 100 designates joint lines connecting the front panel 92 and the partition panels 96, and 102 designates joint lines connecting the rear panel 94 and the partition panels 96.

In this example, each partition panel 96 comprises a panel half 96A of which one edge is connected to the front panel 92 and a panel half 96B of which one edge is connected to the rear panel 94. The other edges of the panel halves 96A, 96B are connected to each other by sewing yarn 108. Therefore, the length of the partition panel 96 (this length corresponds to the distance between the edges, connected to the front panel 92 and the rear panel 94, of the partition panel 96, that is, the distance between the joint lines 100 and 102; the same is true for the following) can be suitably adjusted by adjusting the outlet seam width of the other edges of the panel halves 96A, 96B.

Inside of the airbag 90 is divided into a first chamber 104, formed in a U-like shape extending along the lower edge, the left-side and right-side edge of the airbag, and three second chambers 106 which are aligned in the vertical direction to each extend in parallel with the upper edge of the airbag 90. The gas generator 5 is located about the center of a portion, extending along the lower edge of the airbag 90, of the first chamber 104.

As the gas generator 5 is actuated, gas is spouted out from the gas generator 5 into the first chamber 104. At this point, nearly entire gas pressure is used for inflating the first chamber 104 so that the first chamber 104 is rapidly inflated. The gas in the first chamber 104 flows substantially uniformly into the second chambers 106, whereby the respective second chambers 106 are substantially uniformly inflated. Because the inlets of the second chambers 106 are narrowed by the curved portions 96a provided on the both ends of the respective partition panels 96, the gas in the second chambers 106 hardly flow back to the first chambers 104 even when the occupant's legs plunges into the chamber 106 positioned about the center of the airbag 90.

According to this airbag 90, since the front panel 92 and the rear panel 94 are connected to each other by the partition panels 96, the thickness of the airbag is small even when the airbag 90 is fully inflated. In addition, since the thickness of the airbag 90 when fully inflated can be adjusted by changing the length of the partition panels 96, the degree of freedom in design is extremely high.

Since the front panel 92 and the rear panel 94 are connected to each other by the partition panels 96, stresses, applied to connected portions between the panels 92, 94 and the partition panels 96 when the inner pressure of the airbag 90 is increased, are smaller than those in case of the panels 92 and 94 are connected to each other directly by sewing or the like. Therefore, the panels 92, 94 may be made of material of which strength is relatively low, thus making the manufacturing cost of the airbag 90 relatively low.

Though three partition panels 96 are used for connecting the front panel 92 and the rear panel 94 in the example of Figs. 10 (a) , 10 (b) , the number of the partition panels may be one, two, or four or more. The configuration of the partition panel is arbitrarily designed. Besides the plane type shown in Figs. 10 (a) , 10 (b), for example, band-like partition panels may be used.

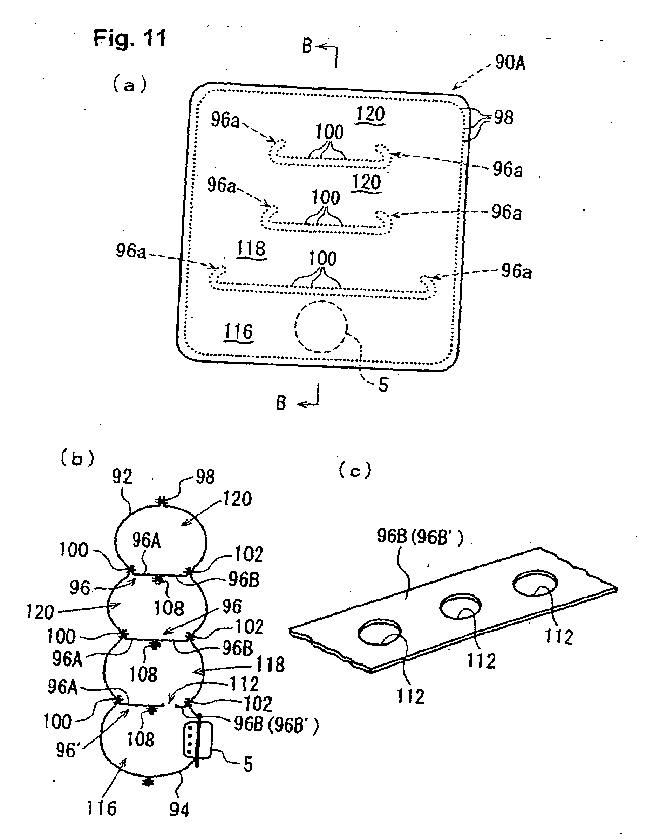

As an airbag 90A shown in Figs. 11(a)-11(c), the partition panels may be provided with vent holes (gas holes) so that the communication of gas between adjacent chambers in the airbag is allowed by the vent holes. Hereinafter, this airbag 90A will be described in detail. Fig. 11(a) is a front view of the airbag 90A and Fig. 11 (b) is a sectional view taken along a line B-B of Fig. 11(a). Fig. 11(c) is a perspective view showing of a panel half of a partition panel which is formed with vent holes.

Similarly to the airbag 90 of Figs. 10(a), 10(b), in the airbag 90A, the front panel 92 and the rear panel 94 are connected to each other by three partition panels 96 which are arranged to extend parallel to each other in the thickness direction and the lateral direction of the airbag 90A and arranged in lateral rows aligned in the vertical direction of the airbag 90A in a state that the airbag 90A is inflated.

In this example, as shown in Figs. 11(b), 11(c), a panel half 96B (96B') of the lowest partition panel 96 (96') among the three partitions 96 is formed with a plurality of small vent holes 112. As shown in Fig. 11(a), the left and right ends of the lowest partition panel 96 (96') are located nearer to the left- and right-side edges than the left and right ends of the other two partition panels 96 so that the lowest partition panel 96 (96') has curved portions 96a at positions near the left- and right-side edges of the airbag 90A.

In this example, when the airbag 90A is inflated, the distances between the left and right ends of the partition panel 96 (96') and the left- and right-side edges of the airbag 90A, respectively are shortened to nearly close the path of gas because the left- and right-side edges of the airbag 90A move close to each other according to the increase in the thickness of the airbag 90A. However, the airbag may be designed such that the spaces therebetween are left even when the airbag 90A is inflated.

The inside of the airbag 90A is divided by these partition panels 96 into a first chamber 116 extending along the lower edge of the airbag 90A in the lateral direction, a second chamber 118 formed in a U-like shape extending along the upper edge of the first chamber 116 and the left- and right-side edges of the airbag 90A, and two third chambers 120 extend along the upper edge of the airbag 90A in the lateral direction and arranged vertically in parallel to each other. The gas generator 5 is located about the center of the first chamber 116 extending along the lower edge of the airbag 90A.

The other structure of the airbag 90A is the same as that of the airbag 90 of Figs. 10(a), 10(b). Therefore, component parts of Figs. 11(a)-11(c) corresponding to the parts of the example of Figs. 10(a), 10(b) are designated with the same reference numeral, thus omitting the detail description of such component parts.

As the gas generator 5 is actuated, gas is spouted out from the gas generator 5 into the first chamber 116. At this point, nearly entire gas pressure is used for inflating the first chamber 116 so that the first chamber 116 is rapidly inflated. The gas in the first chamber 116 flows into the second chamber 118 through the vent holes 112 formed in the partition panel 96 (96')and the both sides of the partition panel 96 (96'), whereby the second chamber 118 is inflated. As noted above in this example, as the airbag 90A is inflated, the spaces between the left and light ends of the partition panel 96 (96') and the left- and right-side edges of the airbag 90A are nearly closed. Therefore, most of gas from the first chamber 116 to the second chamber 118 flows through the vent holes 112 and only a little part of the gas flows through the spaces at both sides of the partition panel 96 (96'). The gas in the second chamber 118 successively flows into the third chambers 120, 120 to inflate the chambers 120, 120.

In this example, as the airbag 90A is inflated, the spaces between the lateral ends of the lowest partition panel 96 (96') and the left- and right-side edges of the airbag 90A are nearly closed. As a result, the amount of gas flowing from the first chamber 116 to the second chamber 118 through the spaces at the both sides of the partition panel 96 (96') is so little. Therefore, gas is easily accumulated at both side edges of the first chamber 116 so that the first chamber 116 can be rapidly inflated to every corner. Forthis, high-pressure and high-speed gas starts to flow into the second chamber through the vent holes 112 at a relatively earlier stage. In addition, the gas in the second chamber flows into the third chamber at a relatively earlier stage. As a result of this, the respective chambers 116-120 are inflated without large time difference so that the airbag 90A can be inflated significantly smooth as a whole.

Though only one panel half of the lowest partition panel among the partition panels is formed with vent holes in this example, the other panel half may also be formed with vent holes. In addition, any partition panel may have vent holes and all of the partition panels may be formed with vent holes. Though a plurality of small holes are formed as the vent holes in this example as shown in Fig. 11 (c) , the configuration, the size, and the number of the vent holes are not limited thereto. The behavior of the airbag during inflation can be controlledby suitably changing of adjusting the configuration, the size, and the number of the vent holes corresponding to the construction of the airbag.

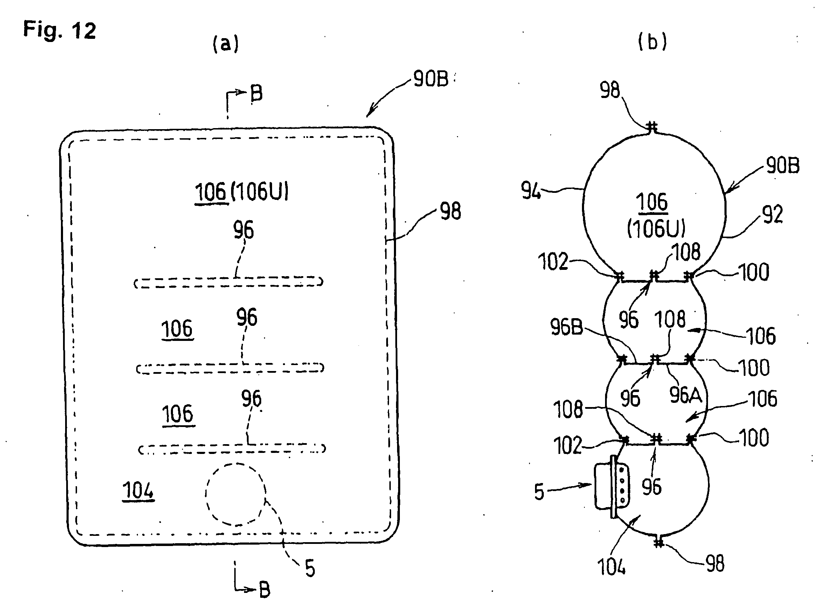

Referring to Figs. 12 (a) -15 (b), an example of which a chamber for receiving knees is designed to have thickness larger than that of other chambers when the airbag is inflated.

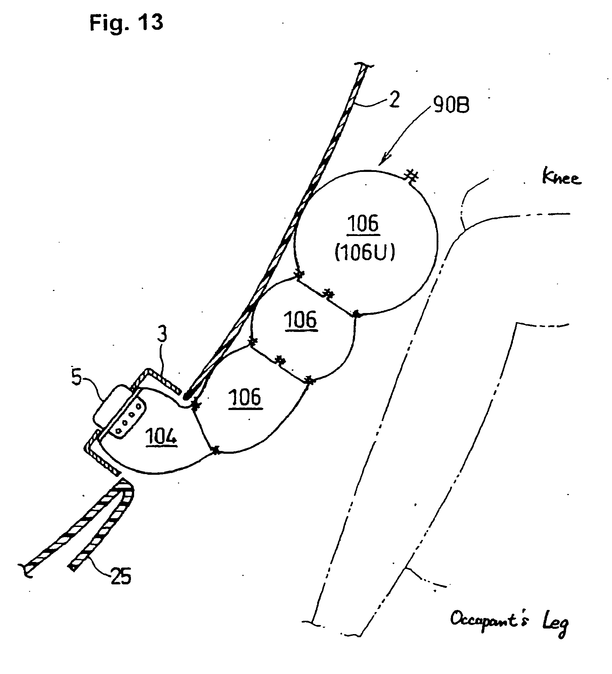

Figs. 12 (a), 12 (b) and Fig. 13 show a first example of the aforementioned airbag. Fig. 12(a) is a front view of the airbag, Fig. 12 (b) is a sectional view taken along a line B-B of Fig. 12 (a) , and Fig. 13 is a vertical sectional view showing a state that the airbag is inflated and deployed along an interior panel.

This airbag 90B has a similar structure as that of the aforementioned airbag 90 shown in Figs. 10(a), 10(b). That is, the airbag 90B has a front panel 92 and a rear panel 94 which are connected to each other by three partition panels 96 similarly to the airbag 90. The partition panels 96 are arranged such that these extend substantially parallel to each other both in the thickness direction of the airbag 90B and the vehicle-lateral direction when the airbag 90B is inflated. Difference from the aforementioned airbag 90 is that each partitionpanel 96 extends in the lateral direction in a straight line.

The distance between the uppermost partition panel 96 among the three partition panels 96 and the upper edge of the airbag 90B is larger than the distance between the other partition panels and the distance between the lowest partition and the lower edge of the airbag 90B. Therefore, the uppermost second chamber 106 (106U) has a thickness larger than that of the other second chambers 106 and that of the first chamber 104 when inflated. The second chamber 106U is positioned at the top of the airbag 90B.

The other structure of the airbag 90B is the same as that of the airbag 90 and the same numerals designate the corresponding parts.

As the gas generator 5 is actuated, gas is spouted out from the gas generator 5 into the first chamber 104. At this point, nearly entire gas pressure is used for inflating the first chamber 104 so that the first chamber 104 is rapidly inflated. Successively, the gas in the first chamber 104 flows substantially uniformly into the second chambers 106, whereby the respective second chambers 106 are substantially uniformly inflated.

According to this airbag 90B, the uppermost second chamber 106U is inflated and deployed in a range about and above a portion in front of and corresponding to a seat squab surface of the vehicle seat. Accordingly, the uppermost second chamber 106U can be inflated and deployed about a portion in front of the knees of the occupant, thereby receiving the knees and enough absorbing the impact on the knees and the joints for thighs.

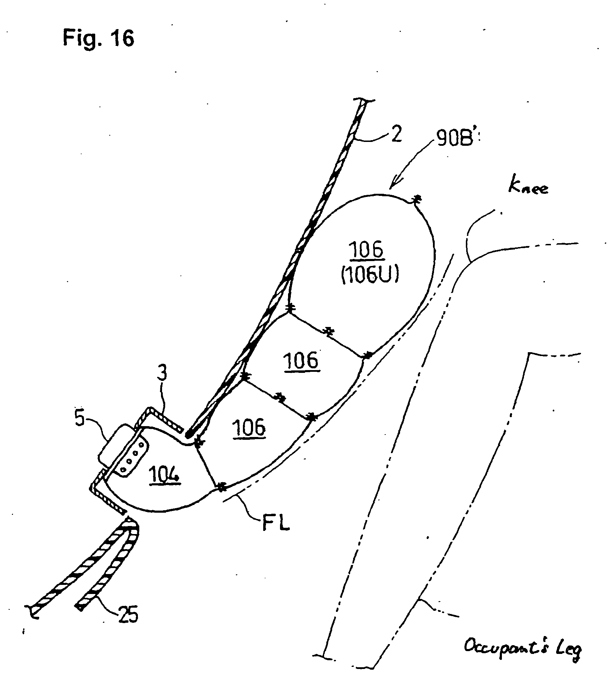

In this example, as an airbag 90B' shown in Fig. 16, the airbag may be designed to have thickness gradually increasing from the bottom to the top when inflated by selecting the lengths and positions of the partition panels. It should be noted that a line FL of Fig. 16 schematically indicates an envelope of a face, opposing the occupant, of the airbag 90B'. The distance between the envelope FL and the interior panel 2 increases upwardly.

Though three partition panels 96 are used for connecting the front panel 92 and the rear panel 94 in the examples of Figs. 12(a), 12(b), Fig. 13, and Fig. 16, the number of the partition panels may be one, two, or four or more.

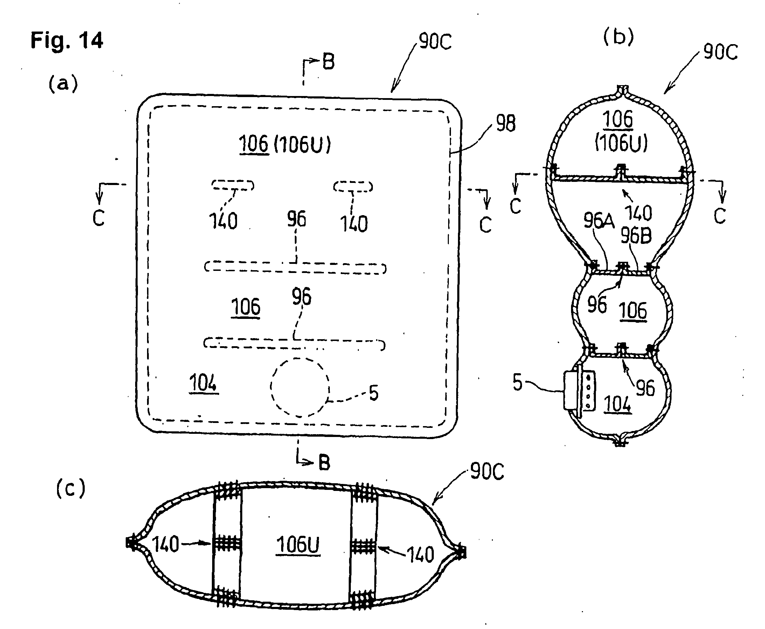

As an airbag 90C shown in Figs. 14(a)-14(c), tethers (belts) 140 may be provided in the uppermost second chamber 106U for connecting the front panel 92 and the rear panel 94. Fig. 14 (a) is a front view of the airbag 90C, Figs. 14 (b) and 14(c) are sectional views taken along a line B-B and a line C-C of Fig. 14(a), respectively.

Because of the tethers 140, the thickness of the uppermost second chamber 106U when inflated can be prevented from being too large. Though two tethers 140 are used in Figs. 14(a), 14 (b) , and 14 (c) , one or more than three tethers may be used.

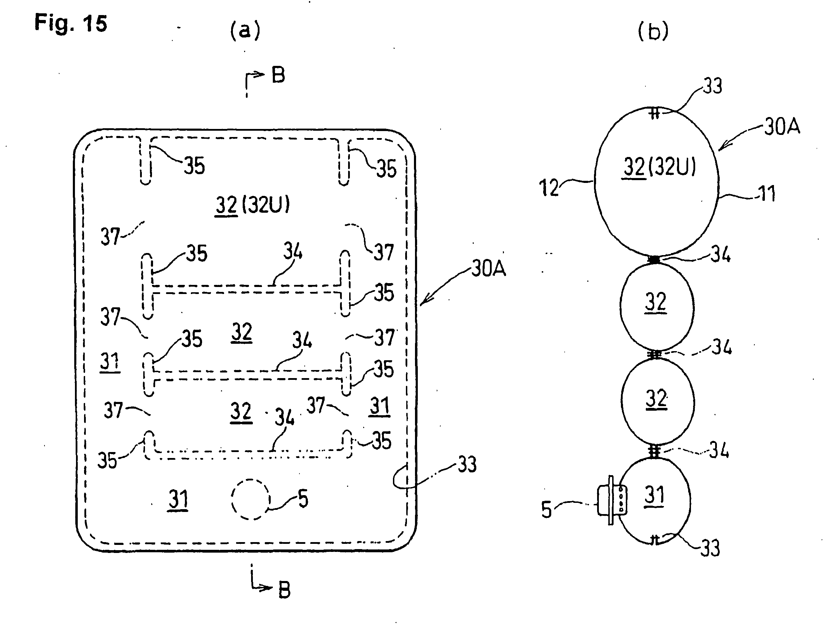

Figs. 15 (a) , 15(b) show an airbag 30A which is similar to the aforementioned airbag 30 of Fig. 4 but is different in that the uppermost second chamber 32 (32U) has thickness larger than that of the other second chambers 32 and that of a first chamber 31 when inflated. Fig. 15 (a) is a front view of the airbag 30A and Fig. 15(b) is a sectional view taken along a line B-B of Fig. 15(a).

The airbag 30A comprises a front panel 11 arranged to face the occupant and a rear panel 12 arranged behind. The rear panel 12 is provided with an insertion hole (without numeral) for a gas generator 5.

These panels 11, 12 are joined linearly along their periphery to make them into an envelope shape. Numeral 33 designates a joint line for the joint along their periphery.

Similarly to the airbag 30 of Fig. 4, this airbag 30A has a first chamber 31 formed in a U-like shape extending along the lower edge, left- and right-side edges of the airbag. The gas generator 5 is located at the center of a portion along the lower edge of the first chamber 31. Second chambers 32 extend in the lateral direction. Each second chamber 32 has gas inlets 37 at both lateral sides. Numeral 34 designates joint lines as linear sewn portions for defining the second chambers 32, and 35 designates partitions for narrowing the inlets 37.

The airbag 30A is provided with a plurality of second chambers 32. Among them, the uppermost second chamber 32 is located at the top of the airbag 30A. The distance between the joint line 34 and the top edge of the airbag 30A is larger than the distance between the adjacent joint lines 34 and larger than the distance between the joint line 34 and the lower edge of the airbag 30A. Therefore, the uppermost second chamber 32U has a thickness larger than that of the other second chambers 32 and that of the first chamber 31 when inflated.

According to this airbag 30A, the uppermost second chamber 32U is inflated and deployed about a portion in front of the knees of the occupant, thereby receiving the knees.

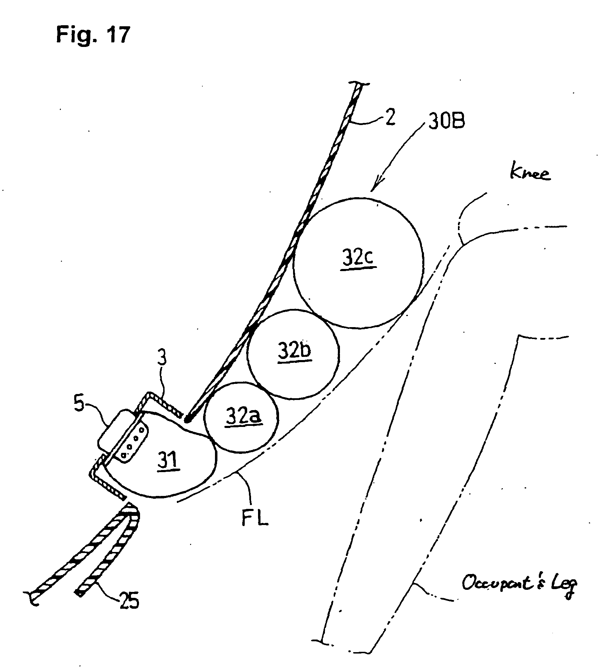

Also in this embodiment, as an airbag 30B shown in Fig. 17, the airbag may be designed to have thickness gradually increasing from the bottom to the top when inflated so that the distance between the envelope FL and the interior panel 2 increases toward the top.

Though the leg protection device is installed to the interior panel 2 in any of the aforementioned embodiments, the device may be installed to a glove box. The joint along joint lines may be formed by adhesive or a combination of sewing yarns and adhesive, besides only by sewing yarns.

### [Effects of the Invention]

As described above, a leg protection device for vehicle occupants of the present invention has an airbag of which thickness when inflated is small, whereby the airbag can be rapidly inflated even with a gas generator having small generating capacity. The leg protection device can sufficiently receive and stop occupant's legs even with an airbag having a small thickness when inflated.

## Claims

1. A leg protection device for vehicle occupants comprising:
an airbag (4; 30; 40; 50; 60; 70) installed in a vehicle member in front of a vehicle seat; and
a gas generator (5) for inflating the airbag (4; 30; 40; 50; 60; 70), wherein
the airbag is provided with a first chamber (21; 31; 41; 51; 61; 71) into which gas from the gas generator (5) is first introduced, and at least one second chamber (22; 32; 42; 52; 62; 72) which communicates with the first chamber (21; 31; 41; 51; 61; 71) through a gas inlet and into which the gas passing through the first chamber (21; 31; 41; 51; 61; 71) is introduced, wherein
the first chamber (21; 31; 41; 51; 61; 71) and the second chamber (22; 32; 42; 52; 62; 72) are arranged to extend along said vehicle member when the airbag (4; 30; 40; 50; 60; 70) is inflated, wherein
said second chamber (22; 32; 42; 52; 62; 72) extends in a longitudinal direction to allow gas entering through its inlet to flow straight therein, wherein
said second chamber (22; 32; 42; 52; 62; 72) is provided at its inlet with a partition (15; 35; 45; 55) extending in a direction perpendicular to the longitudinal direction of the second chamber (22; 32; 42; 52; 62; 72) in order to narrow the width of said inlet with respect to the width of the second chamber (22; 32; 42; 52; 62; 72), and wherein
the airbag (4; 30; 40; 50; 60; 70) comprises a front panel (11) arranged to face a vehicle occupant and a rear panel arranged to face said vehicle member, **characterized in that**
the inside of the airbag (4; 30; 40; 50; 60; 70) is divided into said first chamber (21; 31; 41; 51; 61; 71) and said second chamber (22; 32; 42; 52; 62; 72) by a linear joint portion (14; 34; 44; 54) connecting the front panel (11) and the rear panel (12).

2. A leg protection device according to claim 1, wherein the first chamber (31; 41; 51) extends along a side edge of the airbag (30; 40; 50).

3. A leg protection device according to claim 1 or 2, wherein the first chamber (31) is formed in an U-like shape extending along the lower edge, the left side edge and the right side edge of the airbag (30).

4. A leg protection device according to any one of the preceding claims, wherein at least a part of said first chamber (21; 31; 41; 51) extends in the vertical direction of the airbag and a plurality of second chambers (22; 32; 42; 52) extend in the lateral direction.

5. A leg protection device according to claim 1, wherein the first chamber (61) is formed in a sideward H-like shape and second chambers (62) are arranged on both sides of a middle portion (61a) of the first portion such that each of the second chambers (62) extends vertically.

6. A leg protection device according to claim 1, wherein the first chamber (71) is formed in an inverse T-like shape and second chambers (72) are arranged on both sides of a portion (71a) of the first chamber (71) to extend vertically.

7. A leg protection device as claimed in any one of the preceding claims, wherein the airbag further comprises a third chamber (63) into which gas passing through said second chamber (22; 32; 42; 52; 62; 72) is introduced and the inlet of said third chamber (63) is narrowed.

8. A leg protection device as claimed in claim 7, wherein said second chamber (22; 32; 42; 52; 62; 72) and said third chamber (63) extend in the lateral direction.

9. A leg protection device as claimed in any one of the preceding claims, wherein a chamber (21, 22; 31, 32; 41, 42; 51, 52; 61, 62; 71, 72) to be deployed about a portion in front of knees of the vehicle occupant has a thickness larger than that of the other chamber (s) (21, 22; 31, 32; 41, 42; 51, 52; 61, 62; 71, 72) when inflated.

10. A leg protection device as claimed in claim 9, wherein a plurality of second chambers (22; 32; 42; 52) is provided and one of the second chambers (22; 32; 42; 52) is located at the top of the airbag (4; 30; 40; 50) and this uppermost second chamber (22; 32; 42; 52) is the chamber having thickness larger than that of the other chambers (22; 32; 42; 52), and wherein said uppermost second chamber (22; 32; 42; 52) is to be deployed about a portion in front of knees of the vehicle occupant.

## Patentansprüche

1. Beinschutzvorrichtung für Fahrzeuginsassen, umfassend:
einen Airbag (4; 30; 40; 50; 60, 70), welcher in einem Fahrzeugteil vor einem Fahrzeugsitz installiert ist; und
einen Gasgenerator (5) zum Aufblähen des Airbags (4; 30; 40; 50; 60; 70),
wobei der Airbag mit einer ersten Kammer (21; 31; 41; 51; 61; 71), in welche Gas aus dem Gasgenerator (5) zuerst eingeführt wird, und mindestens einer zweiten Kammer (22; 32; 42; 52; 62; 72), welche mit der ersten Kammer (21; 31; 41; 51; 61; 71) durch einen Gaseinlass in Verbindung steht und in welche durch die erste Kammer (21; 31; 41; 51; 61; 71) strömendes Gas eingeführt wird, versehen ist,
wobei die erste Kammer (21; 31; 41; 51; 61; 71) und die zweite Kammer (22; 32; 42; 52; 62; 72) derart angeordnet sind, dass sie sich entlang des Fahrzeugteils erstrecken, wenn der Airbag (4; 30; 40; 50; 60; 70) aufgebläht wird,
wobei sich die zweite Kammer (22; 32; 42; 52; 62; 72) in einer longitudinalen Richtung erstreckt, um zu ermöglichen, dass durch ihren Einlass eintretendes Gas gerade in sie hineinströmen kann,
wobei die zweite Kammer (22; 32; 42; 52; 62; 72) an ihrem Einlass mit einer Unterteilung (15; 35; 45; 55) versehen ist, welche sich in einer Richtung senkrecht zu der longitudinalen Richtung der zweiten Kammer (22; 32; 42; 52; 62; 72) erstreckt, um die Breite des Einlasses bezüglich der Breite der zweiten Kammer (22; 32; 42; 52; 62; 72) zu verengen, und
wobei der Airbag (4; 30; 40; 50; 60; 70) eine vordere Stoffbahn (11), welche derart angeordnet ist, dass sie einem Fahrzeuginsassen zugewandt ist, und eine hintere Stoffbahn, welche derart angeordnet ist, dass sie dem Fahrzeugteil zugewandt ist, umfasst,
**dadurch gekennzeichnet,**
**dass** das Innere des Airbags (4; 30; 40; 50; 60; 70) durch einen linearen Verbindungsabschnitt (14; 34; 44; 54) in die erste Kammer (21; 31; 41; 51; 61; 71) und die zweite Kammer (22; 32; 42; 52; 62; 72) unterteilt ist, wobei der lineare Verbindungsabschnitt die vordere Stoffbahn (11) und die hintere Stoffbahn (12) verbindet.

2. Beinschutzvorrichtung nach Anspruch 1, wobei sich die erste Kammer (31; 41; 51) entlang einer Seitenkante des Airbags (30; 40; 50) erstreckt.

3. Beinschutzvorrichtung nach Anspruch 1 oder 2, wobei die erste Kammer (31) in einer U-artigen Form ausgebildet ist, welche sich entlang der unteren Kante, der linken Seitenkante und der rechten Seitenkante des Airbags (30) erstreckt.

4. Beinschutzvorrichtung nach einem der vorhergehenden Ansprüche, wobei sich zumindest ein Teil der ersten Kammer (21; 31; 41; 51) in der vertikalen Richtung des Airbags und eine Vielzahl von zweiten Kammern (22; 32; 42; 52) in die laterale Richtung erstreckt.

5. Beinschutzvorrichtung nach Anspruch 1, wobei die erste Kammer (61) mit einer seitlichen H-artigen Form ausgebildet ist und die zweiten Kammern (62) auf beiden Seiten eines mittleren Abschnitts (61a) des ersten Abschnitts derart angeordnet sind, dass sich jede der zweiten Kammern (62) vertikal erstreckt.

6. Beinschutzvorrichtung nach Anspruch 1, wobei die erste Kammer (71) in einer umgekehrten T-artigen Form ausgebildet ist und die zweiten Kammern (72) auf beiden Seiten eines Abschnitts (71a) der ersten Kammer (71) angeordnet sind, um sich vertikal zu erstrecken.

7. Beinschutzvorrichtung wie in einem der vorhergehenden Ansprüche beansprucht, wobei der Airbag darüber hinaus eine dritte Kammer (63) umfasst, in welche durch die zweite Kammer (22; 32; 42; 52; 62; 72) strömendes Gas eingeführt wird, und wobei der Einlass der dritten Kammer (63) verengt ist.

8. Beinschutzvorrichtung wie in Anspruch 7 beansprucht, wobei die zweite Kammer (22; 32; 42; 52; 62; 72) und die dritte Kammer (63) sich in der lateralen Richtung erstrecken.

9. Beinschutzvorrichtung wie in einem der vorhergehenden Ansprüche beansprucht, wobei eine an einem Abschnitt vor den Knien des Fahrzeuginsassen zu entfaltende Kammer (21, 22; 31, 32; 41, 42; 51, 52; 61, 62; 71, 72) im aufgeblähten Zustand eine größere Dicke als diejenige der anderen Kammer bzw. der anderen Kammern (21, 22; 31, 32; 41, 42; 51, 52; 61, 62; 71, 72) aufweist.

10. Beinschutzvorrichtung wie in Anspruch 9 beansprucht, wobei eine Vielzahl von zweiten Kammern (22; 32; 42; 52) vorgesehen ist und eine der zweiten Kammern (22; 32; 42; 52) an der Oberseite des Airbags (4; 30; 40; 50) angeordnet ist, wobei diese oberste zweite Kammer (22; 32; 42; 52) diejenige Kammer ist, welche eine größere Dicke als diejenige der anderen Kammern (22; 32; 42; 52) aufweist, und wobei die oberste zweite Kammer (22; 32; 42; 52) an einem Abschnitt vor den Knien des Fahrzeuginsassen zu entfalten ist.

## Revendications

1. Dispositif de protection de jambes pour des occupants de véhicule comprenant:
- un coussin de sécurité (4; 30; 40; 50; 60; 70) installé dans un élément de véhicule en face d'un siège de véhicule; et
- un générateur de gaz (5) pour gonfler le coussin de sécurité (4; 30; 40; 50; 60; 70), dans lequel:
- le coussin de sécurité est prévu avec une première chambre (21; 31; 41; 51; 61; 71) dans laquelle le gaz provenant du générateur de gaz (5) est introduit dans un premier temps, et au moins une seconde chambre (22; 32; 42; 52; 62; 72) qui communique avec la première chambre (21; 31; 41; 51; 61; 71) par le biais d'une entrée de gaz et dans laquelle le gaz passant par la première chambre (21; 31; 41; 51; 61; 71) est introduit, dans lequel:
- la première chambre (21; 31; 41; 51; 61; 71) et la seconde chambre (22; 32; 42; 52; 62; 72) sont agencées pour s'étendre le long dudit élément de véhicule lorsque le coussin de sécurité (4; 30; 40; 50; 60; 70) est gonflé, dans lequel:
- ladite seconde chambre (22; 32; 42; 52; 62; 72) s'étend dans une direction longitudinale pour permettre au gaz d'entrer par son entrée afin de s'écouler directement à l'intérieur de celle-ci, dans lequel:
- ladite seconde chambre (22; 32; 42; 52; 62; 72) est prévue au niveau de son entrée avec une séparation (15; 35; 45; 55) s'étendant dans une direction perpendiculaire à la direction longitudinale de la seconde chambre (22; 32; 42; 52; 62; 72) afin de rétrécir la largeur de ladite entrée par rapport à la largeur de la seconde chambre (22; 32; 42; 52; 62; 72), et dans lequel:
- le coussin de sécurité (4; 30; 40; 50; 60; 70) comprend un panneau avant (11) agencé pour faire face à un occupant de véhicule et un panneau arrière agencé pour faire face audit élément de véhicule, **caractérisé en ce que**:
- l'intérieur du coussin de sécurité (4; 30; 40; 50; 60; 70) est divisé en ladite première chambre (21; 31; 41; 51; 61; 71) et ladite seconde chambre (22; 32; 42; 52; 62; 72) par une partie de joint linéaire (14; 34; 44; 54) raccordant le panneau avant (11) et le panneau arrière (12).

2. Dispositif de protection de jambes selon la revendication 1, dans lequel la première chambre (31; 41; 51) s'étend le long d'un bord latéral du coussin de sécurité (30; 40; 50).

3. Dispositif de protection selon la revendication 1 ou 2, dans lequel la première chambre (31) est formée selon une forme de U s'étendant le long du bord inférieur, le bord latéral gauche et le bord latéral droit du coussin de sécurité (30).

4. Dispositif de protection de jambes selon l'une quelconque des revendications précédentes, dans lequel au moins une partie de ladite première chambre (21; 31; 41; 51) s'étend dans la direction verticale du coussin de sécurité et une pluralité de secondes chambres (22; 32; 42; 52) s'étend dans la direction latérale.

5. Dispositif de protection de jambes selon la revendication 1, dans lequel la première chambre (61) est formée selon une forme de H latéralement et les secondes chambres (62) sont agencées des deux côtés d'une partie centrale (61a) de la première partie de sorte que chacune des secondes chambres (62) s'étend verticalement.

6. Dispositif de protection de jambes selon la revendication 1, dans lequel la première chambre (71) est formée selon une forme de T inversé et les secondes chambres (72) sont agencées des deux côtés d'une partie (71a) de la première chambre (71) pour s'étendre verticalement.

7. Dispositif de protection de jambes selon l'une quelconque des revendications précédentes, dans lequel le coussin de sécurité comprend en outre une troisième chambre (63) dans laquelle le gaz passant par ladite seconde chambre (22; 32; 42; 52; 62; 72) est introduit et l'entrée de ladite troisième chambre (63) est rétrécie.

8. Dispositif de protection de jambes selon la revendication 7, dans lequel ladite seconde chambre (22; 32; 42; 52; 62; 72) et ladite troisième chambre (63) s'étendent dans la direction latérale.

9. Dispositif de protection de jambes selon l'une quelconque des revendications précédentes, dans lequel une chambre (21, 22; 31, 32; 41, 42; 51, 52; 61, 62; 71, 72) destinée à être déployée autour d'une partie en face des genoux de l'occupant de véhicule, a une épaisseur plus importante que celle de(s) l'autre(s) chambre(s) (21, 22; 31, 32; 41, 42; 51, 52; 61, 62; 71, 72) lorsqu'elle(s) est (sont) gonflée(s).

10. Dispositif de protection de jambes selon la revendication 9, dans lequel une pluralité de secondes chambres (22; 32; 42; 52) est prévue et l'une des secondes chambres (22; 32; 42; 52) est située au niveau de la partie supérieure du coussin de sécurité (4; 30; 40; 50) et cette seconde chambre la plus haute (22; 32; 42; 52) est la chambre ayant une épaisseur plus importante que celle des autres chambres (22; 32; 42; 52), et dans lequel ladite seconde chambre la plus haute (22; 32; 42; 52) doit être déployée autour d'une partie en face des genoux de l'occupant du véhicule.
